## Europäisches Patentamt
## European Patent Office
## Office européen des brevets

(11) Numéro de publication: **0 248 732**
**A1**

# DEMANDE DE BREVET EUROPEEN

(21) Numéro de dépôt: **87401239.6**

(22) Date de dépôt: **03.06.87**

(51) Int. Cl.⁴: **G 01 F 15/06**
**G 01 D 3/06**

(30) Priorité: **04.06.86 FR 8608062**

(43) Date de publication de la demande:
**09.12.87 Bulletin 87/50**

(84) Etats contractants désignés:
**BE DE ES GB IT NL**

(71) Demandeur: **COMMISSARIAT A L'ENERGIE ATOMIQUE 31/33, rue de la Fédération F-75015 Paris (FR)**

(72) Inventeur: **Penalva, Jean-Michel Rue Riaille F-07700 Saint Marcel d'Ardèche (FR)**

(74) Mandataire: **Mongrédien, André et al c/o BREVATOME 25, rue de Ponthieu F-75008 Paris (FR)**

(54) Procédé de mesure des valeurs d'au moins un paramètre évoluant dans le temps de façon répétitive avec surveillance de seuils à niveaux variables.

(57) L'invention concerne un procédé de mesure de valeurs d'au moins un paramètre évoluant dans le temps de façon répétitive, au cours de périodes successives, avec surveillance de seuils à niveaux variables.

Ce procédé consiste à convertir, pour chaque période de mesure, un signal analogique représentatif de l'évolution des valeurs de ce paramètre, en valeurs numériques instantanées de mesure ($C_1$) et à enregistrer ces valeurs numériques. Le procédé consiste aussi à enregistrer des valeurs numériques instantanées de référence $C$ obtenues par échantillonnage analogique, au cours des périodes de mesure pour lesquelles les valeurs de paramètre évoluent de façon souhaitée. On compare une à une les valeurs numériques de mesure avec les valeurs numériques de référence, pour déclencher une alarme ou une commande lorsqu'au moins une valeur numérique de mesure ($C_1$) dépasse la valeur correspondante de référence, d'un nombre prédéterminé ou calculé par une fonction programmée.

Application notamment à la surveillance des débits des cours d'eau.

FIG. 2

EP 0 248 732 A1

**Description**

PROCEDE DE MESURE DES VALEURS D'AU MOINS UN PARAMETRE EVOLUANT DANS LE TEMPS DE FACON
REPETITIVE, AVEC SURVEILLANCE DE SEUILS A NIVEAUX VARIABLES

La présente invention concerne un procédé de mesure des valeurs d'au moins un paramètre évoluant dans le temps de façon répétitive, au cours de périodes successives de mesure, avec surveillance de seuils à niveaux variables. Elle s'applique notamment à la mesure et à la surveillance du débit et/ou de la pollution d'un cours d'eau.

On sait que pour gérer par exemple un réseau de collecteur d'eaux usées dans une station d'épuration, il est nécessaire de connaître l'évolution, au cours du temps, des valeurs d'un paramètre important qui est le débit des eaux usées. Ces eaux transitent dans le collecteur et dans la station d'épuration. On sait également qu'il est nécessaire d'effectuer à certains instants des prélèvements séquentiels d'échantillons des eaux usées, pour des analyses ultérieures, notamment de pollution. Une alarme doit être déclenchée pour toute valeur anormale de débit ou de pollution des eaux usées. Lors d'un orage par exemple, le débit et/ou la pollution augmentent et il est parfois utile de déclencher une alarme pour indiquer que le débit atteint un seuil critique supérieur. Il est aussi utile de commander des prélèvements d'échantillons d'eaux usées, notamment au cours des périodes de débits critiques.

Les procédés de mesure et de surveillance connus dans ce domaine d'application, sont de deux types :
- l'un de ces procédés consiste à utiliser un débitmètre programmé, installé à poste fixe qui enregistre la hauteur d'eau et à calculer le débit corres pondant. Ce débitmètre ne permet pas de déclencher une commande de.préleveur d'échantillons par exemple. Ce procédé répond uniquement à un besoin de mesure continue d'un paramètre et nécessite, pour toute adaptation ou toute évolution des conditions de mesure, l'intervention d'un personnel spécialisé. Par ailleurs, l'analyse des valeurs de mesure enregistrée doit être effectuée en temps différé par le personnel d'exploitation ;
- l'autre procédé consiste à utiliser des débitmètres programmables. Ces appareils disposent de convertisseurs interchangeables, chaque convertisseur étant adapté à des conditions particulières de mesures. Le débitmètre le plus perfectionné est contrôlé par un microprocesseur associé à une mémoire de fonction préprogrammée. Ce procédé est limité à la mise en oeuvre des fonctions préprogrammées, non modifiables.

Il en résulte que les procédés de mesure et de surveillance connus ne permettent pas d'effectuer un traitement instantané des valeurs enregistrées des paramètres mesurées. L'analyse en temps réel de l'évolution des valeurs des paramètres mesurés doit être confiée à des opérateurs présents en permanence sur le terrain, ce qui est impossible dans bien des cas, pour des raisons économiques ou pratiques. De plus l'interprétation des mesures et la programmation ne sont accessibles qu'à un personnel spécialisé, et sont d'une mise en oeuvre peu aisée.

L'invention a pour but de remédier à ces inconvénients et notamment de fournir un procédé de mesure et de surveillance d'au moins un paramètre évoluant dans le temps de façon répétitive, au cours de périodes successives de mesure ; ce procédé traite les valeurs mesurées des paramètres, en temps réel, et permet de déclencher une alarme ou une commande telle qu'un prélèvement d'échantillons, lorsque les valeurs numéri ques des paramètres mesurés ne correspondent pas à leur évolution normale pré-enregistrée. Le procédé permet en effet de tenir compte d'une évolution normale des valeurs de référence : à la fin de chaque période successive de mesures n'ayant pas donné lieu à une alarme, les valeurs ainsi mesurées et les valeurs de référence sont moyennées afin de constituer de nouvelles valeurs de référence pour la période de mesure suivante. Le procédé de l'invention s'adapte sans difficultés à différents paramètres, sans qu'il soit nécessaire d'utiliser des convertisseurs interchangeables, ou de faire appel à un personnel spécialisé. Il est évident que ce procédé n'est pas limité à la mesure et à la surveillance du débit d'eaux usées dans le collecteur d'une station d'épuration.

L'invention concerne un procédé de mesure et de surveillance de valeurs d'au moins un paramètre évoluant dans le temps de façon répétitive au cours de périodes successives de mesure, consistant à convertir, pour chaque période de mesure, un signal analogique représentatif de l'évolution des valeurs de ce paramètre, en valeurs numériques instantanées de mesure, par échantillonnage du signal analogique, et à enregistrer ces valeurs numériques instantanées de mesure, caractérisé en ce qu'il consiste enregistrer des valeurs numériques instantanées de référence obtenues par échantillonnage dudit signal analogique, au cours des périodes de mesure pour lesquelles les valeurs du paramètre évoluent de façon souhaitée, puis à comparer pour chacune des périodes successives suivantes, une à une, les valeurs numériques de mesure avec les valeurs numériques de référence, pour déclencher une alarme ou une commande lorsqu'au moins une valeur numérique de mesure dépasse la valeur correspondante de référence et/ou est inférieure à cette valeur de référence, d'un nombre prédéterminé ou calculé par une fonction pré-programmée.

L'invention s'applique aussi à la mesure et à la surveillance du débit et/ou de la pollution des eaux usées dans une station d'épuration.

Les caractéristiques et avantages de l'invention ressortiront mieux de la description qui va suivre donnée en référence aux dessins annexés dans lesquels :
    - la figure 1 représente schématiquement un dispositif permettant de mettre en oeuvre le procédé de mesure et de surveillance de l'invention ;

- la figure 2 est un diagramme qui permet de mieux comprendre l'application du procédé de l'invention à la mesure et à la surveillance du débit et/ou de la pollution des eaux usées dans une station d'épuration et notamment dans le collecteur de cette station.

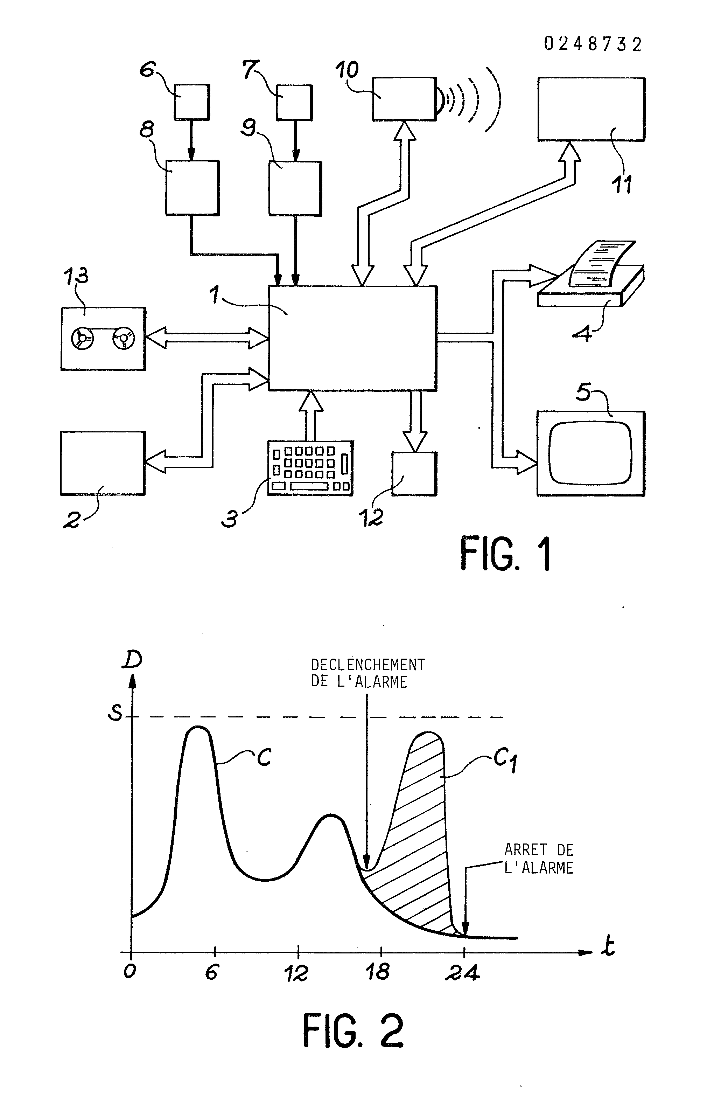

Le dispositif de la figure 1 comprend une unité de traitement 1 telle qu'un micro-ordinateur par exemple. Cette unité de traitement est reliée à une mémoire 2 d'enregistrement de programme de traitement et à un clavier 3 de commande. Elle est aussi reliée à diverses unités périphériques telles que par exemple une imprimante 4, et une console de visualisation 5. On n'a pas représenté sur cette figure les différentes interfaces et les unités d'entrée-sortie.

Des capteurs 6, 7, dont le nombre a été limité à deux par exemple, fournissent des signaux analogiques représentatifs de paramètres évoluant dans le temps de façon répétitive, au cours de périodes successives de mesure. Le capteur 6, dans le cas où le procédé est appliqué à la mesure et à la surveillance du débit et de la pollution dans une station d'épuration, fournit par périodes de 24 heures, un signal analogique représentatif de l'évolution du débit au cours de cette période. Le capteur 7, peut par exemple fournir un signal analogique représentatif de l'évolution d'un paramètre caractéristique (température ou conductivité par exemple).

Les sorties des capteurs sont reliées respectivement à des convertisseurs analogiques-numériques 8, 9. Les sorties des convertisseurs analogiques-numériques fournissent au micro-ordinateur 1, des valeurs numériques instantanées de mesures, dont le nombre dépend de la fréquence imposée par le micro-ordinateur 1. Le convertisseur 8 fournit ainsi des valeurs numériques instantanées de niveau, permettant le calcul du débit, dans l'application choisie. Ces valeurs numériques sont enregistrées dans une autre mémoire 13 reliée au micro-ordinateur 1. Cette mémoire peut être par exemple de type magnétique.

Le procédé de l'invention consiste tout d'abord à enregistrer des valeurs numériques instantanées de référence, obtenues par échantillonnage du signal analogique, au cours d'une période de référence, de durée égale à celle de chacune des périodes de mesures. Cette période de référence est une période au cours de laquelle les valeurs du paramètre mesuré, évoluent de façon souhaitée. C'est ainsi par exemple que dans l'application du procédé à la mesure et à la surveillance du débît et/ou de la pollution d'une station d'épuration, on mesure le paramètre débit et on enregistre les valeurs numériques correspondantes, au cours d'une période de référence de 24 heures au cours de laquelle le débit évolue de façon souhaitée, les eaux usées ne présentant aucune crue par exemple. Ces valeurs numériques instantanées de référence sont enregistrées dans la mémoire 13. Au cours de chaque période successive suivante, de durée égale à celle de la période de référence, on mesure le même paramètre et on enregistre les valeurs numériques de mesure. On compare, au cours de chaque période successive, et en temps réel, une à une, les valeurs numériques de mesure avec les valeurs numériques de référence, pour déclencher une alarme ou une commande lorsqu'au moins une valeur numérique de mesure dépasse la valeur correspondante de référence, d'un nombre prédéterminé ou calculé par une fonction pré-programmée.

Dans l'application du procédé, la mesure et la surveillance du débit et/ou de la pollution d'un cours d'eau, on compare au cours de toute période de 24 heures les valeurs numériques de mesure du débit avec les valeurs numériques de référence, une à une. Une alarme 10 est déclenchée lorsqu'au moins une valeur numérique de mesure dépasse la valeur correspondante de référence et/ou est inférieure à cette valeur de référence, d'un nombre prédéterminé. Cette alarme 10 est commandée par le micro-ordinateur 1. Dans le cas de la mesure et de la surveillance du débit et de la pollution d'un cours d'eau, le micro-ordinateur 1 commande également des moyens 11 qui permettent de prélever des échantillons de l'eau au moment de tout dépassement de débit. Ces échantillons permettent l'analyse ultérieure de la pollution.

L'alarme 10 et les moyens de prélèvement 11 peuvent également être déclenchés par le calculateur, à partir des valeurs numériques fournies à celui-ci par le convertisseur 9 relié au capteur 7.

La figure 2 est un diagramme qui permet de mieux comprendre le procédé de l'invention, dans le cas où celui-ci est appliqué à la mesure et à la surveillance du débit et/ou de la pollution des eaux usées, dans une station d'épuration. Ce diagramme représente par exemple le débit des eaux usées en fonction du temps t, sur une période de 24 heures. La courbe C représente les variations du débit au cours de cette période, lorsque celui-ci évolue de façon souhaitée, c'est-à-dire en absence de crue ou en absence de baisse anormale de niveau. La courbe C est une courbe de référence qui peut être obtenue à partir des valeurs numériques de référence enregistrées dans la mémoire 13. Au cours d'une période de 24 heures suivante, il est possible, par exemple par suite de chute de pluie, que le débit augmente de façon trés importante pendant quelques heures. La courbe de débit n'est plus conforme à la courbe C de référence et présente par exemple un pic C' montrant cet accroissement soudain du débit. La comparaison par le micro-ordinateur, des valeurs numériques de mesure et des valeurs numériques de référence, permet de déclencher l'alarme 10 et de commander les moyens de prélèvement d'échantillons 11, lorsque les valeurs numériques de mesure dépassent une valeur numérique de référence d'un nombre prédéterminé. Il est d'ailleurs possible de vérifier que l'alarme n'est pas déclenchée de façon intempestive, par exemple en venant tester grâce au calculateur 1, le niveau de l'eau dans un pluviomètre 12. En effet, l'alarme n'est déclenchée qu'à cause d'une augmentation de débit, due à une chute de pluie.

L'application du procédé de l'invention à la mesure et à la surveillance du débit et/ou de la pollution d'un cours d'eau et, notamment de l'augmentation intempestive de ce débit, est particulièrement importante. En effet, une précipitation orageuse provoque un lessivage important des sols et entraîne l'apport d'une importante quantité de pollution dans un réseau d'assainissement unitaire. Pour détecter les pics de pollution, il est nécessaire de connaître le débit supplémentaire apporté par les eaux de ruissellement dans le réseau, et de déclencher des prélèvements d'échantil lons d'eau, à cadence rapide, au début de la crue. Ces prélèvements doivent être arrêtés en fin de crue.

Les procédés connus de l'état de la technique ne sont pas capables de résoudre ce problème sans la présence constante d'opérateurs sur le terrain. Toute la difficulté réside en effet dans la détermination du seuil de déclenchement des prélèvements d'échantillons.

Les procédés connus consistent à déclencher le prélèvement quand le débit dépasse un seuil fixé noté S sur la figure 2. Ce seuil doit nécessairement être supérieur au maximum de la courbe C afin de ne pas être dépassé en situation normale.

Par ce procédé connu, le déclenchement de la commande lors de la crue notée $C_1$ sur la figure 2, n'est pas assuré puisqu'il n'y a pas franchissement du seuil fixe S.

Le procédé de l'invention permet le déclenchement de la commande dès le début de la crue $C_1$ et son arrêt dès la fin de la crue lors du retour à la situation de référence C.

## Revendications

1. Procédé de mesure des valeurs d'au moins un paramètre évoluant dans le temps de façon répétitive au cours de périodes successives de mesure, avec surveillance de seuils à niveaux variables, consistant à convertir, pour chaque période de mesure, un signal analogique représentatif de l'évolution des valeurs de ce paramètre, en valeurs numériques instantanées de mesure, par échantillonnage du signal analogique, et à enregistrer ces valeurs numériques instantanées de mesure, caractérisé en ce qu'il consiste à enregistrer des valeurs numériques instantanées de référence C obtenues par échantillonnage dudit signal analogique, au cours des périodes de mesure pour lesquelles les valeurs de paramètre évoluent de façon souhaitée, puis à comparer pour chacune des périodes successives suivantes, une à une, les valeurs numériques de mesure avec les valeurs numériques de référence, pour déclencher une alarme ou une commande lorsqu'au moins une valeur numérique de mesure ($C_1$) dépasse la valeur correspondante de référence, d'un nombre prédéterminé ou calculé par une fonction pré-programmée.

2. Application du procédé conforme à la revendication 1, à la mesure et à la surveillance du débit et/ou de la pollution d'un cours d'eau.

0248732

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | MEASUREMENT AND CONTROL, vol. 4, no. 3, mars 1971, pages T41-T44, Londres, GB; T.H.Y. TEBBUTT: "Flow measurement" | | G 01 F 15/06<br>G 01 D 3/06 |
| | --- | | |
| A | MEASUREMENT AND CONTROL, vol. 16, no. 4, avril 1983, pages 151-155, Dorking, GB; R. BRIGGS: "On-line analytical instrumentation in the water industry - problems and practical solutions. Part 2: Potential solutions" | | |
| | --- | | |
| A | EP-A-0 069 690 (UNITED TECHNOLOGIES)<br>* Page 19, revendication 4 * | | |
| | --- | | **DOMAINES TECHNIQUES RECHERCHES (Int. Cl.4)** |
| A | V.D.I. NACHRICHTEN, vol. 30, no. 52, décembre 1976, page 7, Düsseldorf, DE; "Messen in der Fertigung"<br>* Page 7, alinéa 3 * | | G 01 F<br>G 01 D<br>G 01 W |
| | --- | | |
| A | DE-C- 553 745 (KRAUSE) | | |
| | --- | | |
| A | DE-A-2 932 240 (OPEL) | | |
| | ----- | | |

Le présent rapport de recherche a été établi pour toutes les revendications

| Lieu de la recherche | Date d'achèvement de la recherche | Examinateur |
|---|---|---|
| LA HAYE | 15-09-1987 | HOORNAERT W. |